# EUROPÄISCHE PATENTSCHRIFT

(11) **EP 3 252 896 B1**
(45) Veröffentlichungstag und Bekanntmachung des Hinweises auf die Patenterteilung: **18.09.2019**
(21) Anmeldenummer: 16207476.9
(22) Anmeldetag: 30.12.2016
(51) Int. Cl.: H02G 5/00, H02B 3/00

(54) **STROMSCHIENENMODUL MIT VERGOSSENEN LEITUNGSSTÄBEN UND STROMSCHIENENSYSTEM**
BUSBAR MODULE WITH CASTED CONDUCTORS AND BUSBAR SYSTEM
MODULE DE RAIL D'ALIMENTATION COMPRENANT DES BARRES CONDUCTRICES MOULÉES ET SYSTÈME DE RAIL D'ALIMENTATION

(30) Priorität: 03.06.2016 EP 16173005
(43) Veröffentlichungstag der Anmeldung: 06.12.2017
(73) Patentinhaber: Zurecon AG, 9053 Teufen AR (CH)
(72) Erfinder: Pfluger, Gerd, 4625 Oberbuchsiten (CH)
(74) Vertreter: Rutz & Partner

(56) Entgegenhaltungen:
- EP-A1- 0 547 473
- Tefelen: "Solid insulated bus bar type TPL Cast-resin bus bar type TKL CATALOGUE For safety critical applications Fit & Forget solutions for lowest lifecycle costs", , 29. April 2016 (2016-04-29), XP055388775, Gefunden im Internet: URL:http://tefelen.com/files/5214/6192/633 3/tefelen_catalogue.pdf [gefunden am 2017-07-07]

## Beschreibung

Die Erfindung betrifft ein Stromschienenmodul mit Leitungsstäben, die in einer Gussmasse, wie Giessharz oder Epoxyzement bzw. Polymerbeton, eingegossen sind, sowie ein Stromschienensystem mit solchen modularen Stromschienen.

Für die Übertragung von Strom mit hoher Leistung, hoher Sicherheit und Zuverlässigkeit werden Stromschienen als Übertragungsleitungen zwischen Transformatoren, Haupt- und Unterverteilern in Fabrikhallen, Gewerbe- und Verwaltungsgebäuden oder auch als Steigleitungen in Hochbauten eingesetzt. Stromschienen und dafür vorgesehene Installationsvorrichtungen sind z.B. aus [1], Produktkatalog "Niederspannungs-Schienenverteiler LANZ HE 2.5.2" der LANZ OENSINGEN AG vom Januar 2013 bekannt. Weitere Montagevorrichtungen sind aus [2], Produktkatalog "MULTIFIX" der LANZ OENSINGEN AG vom August 2001 bekannt.

Stromschienen mit in Giessharz oder Polymerbeton eingegossenen Leiterstäben können auf Erdbebensicherheit, Schocksicherheit und Funktionserhalt im Brandfall ausgelegt werden. D.h., weder mechanische, thermische oder chemische Einwirkungen, insbesondere auch kein Druckwasser, können die Betriebssicherheit der Stromschienen gefährden. Mit den Stromschienen kann daher der maximale Sicherheitsstandard, insbesondere der Schutzgrad IP 68 eingehalten werden. Ferner kann ein hoher Standard für den Funktionserhalt im Brandfall, wie F90, eingehalten werden.

Stromschienen mit in Giessharz oder Polymerbeton eingegossenen Leiterstäben unterscheiden sich daher grundsätzlich von gekapselten Stromschienen, wie sie z.B. in [6], US3004096A, [7], US2906811A und [8], US3377421A, gezeigt sind. Solche gekapselten Stromschienen weisen üblicherweise mehrere Leitungsstäbe auf, die je in einem gesonderten Isolationskörper angeordnet und getrennt voneinander gelagert sind. Im Gegensatz zu vergossenen Stromschienen sind die Leitungsstäbe bei gekapselten Stromschienen, die ein Stahlgehäuse aufweisen, somit nicht mit maximaler Stabilität in der gekapselten Stromschiene verankert und somit nur für die elektrische Verbindung, nicht aber für die mechanische Verbindung von Stromschienen geeignet. In [6] ist gezeigt, dass zur mechanischen Verbindung von gekapselten Stromschienen deren Stahlgehäuse an einer Stossstelle stirnseitig aneinandergefügt und durch Metallplatten, die beide Stahlgehäuse überlappen, miteinander verschraubt werden. Nachdem die mechanische Verbindung der gekapselten Stromschienen erfolgt ist, werden die je gegenüber der Stossstelle zurück versetzten Endstücke der Leitungsstäbe durch einen Steckverbinder miteinander verbunden. Zur mechanischen Fixierung des Steckverbinders, mittels dessen die elektrische Verbindung erstellt wird, wird z.B. ein damit verbundener Montagebügel ebenfalls mit beiden Stahlgehäusen verschraubt und dadurch fixiert. Zwischen den Leitungsstäben selbst resultiert somit eine nicht eigenstabile Steckverbindung. Bei Verbindungen dieser Art, die nicht stabil verschraubt sind, können zudem Kontaktprobleme auftreten.

Die Leitungsstäbe einer vergossenen Stromschiene bilden hingegen einen integralen Bestandteil der vergossenen Stromschienen und sind stabil im Gusskörper verankert. In der Praxis werden vergossene Stromschienen daher miteinander verbunden, indem die aus dem Körper herausragenden Endstücke der Leitungsstäbe miteinander verschraubt werden. Dazu werden Kopplungsvorrichtungen verwendet, wie sie z.B. in [1], Seite 8 beschrieben sind. Kopplungsvorrichtungen dieser Art, die auch als Kontaktblock bezeichnet werden, umfassen Isolationsplatten, die zwischen paarweise miteinander verbundenen Anschlusskontakten eingesetzt werden, und zwei Klemmplatten, die mittels einer Verbindungsschraube gegen die Anschlusskontakte gezogen werden, um diese gegenseitig zu verklemmen. Durch diese Verbindung der Anschlüsse der Leitungsstäbe erfolgt nicht nur eine elektrische Verbindung, sondern auch eine mechanische Verbindung zwischen den Stromschienen. Die mechanische Verbindung erfolgt dabei stets zuverlässig, weshalb aus der Sicht des Installateurs keine weiteren Massnahmen erforderlich sind.

Trotzdem treten regelmässig Mängel bei den elektrischen Verbindungen auf, die bei der Installation nicht erkannt werden und die beim Betrieb des installierten Stromschienensystems zu Störungen führen können. Die Anschlusskontakte sind unter Umständen nicht präzise ausgerichtet, wurden gegebenenfalls nicht genügend gereinigt oder werden durch die Kopplungsvorrichtung nicht flächendeckend aneinandergepresst. Durch zahlreiche verschiedene Einflussfaktoren können daher Mängel bei der elektrischen Verbindung auftreten, die zu einem späteren Zeitpunkt permanente oder intermittierende Störungen verursachen können, die gegebenenfalls von der Temperatur der Stromschiene abhängig ist, die ihrerseits in Abhängigkeit des geführten Stroms variiert.

Insbesondere in Hochhäusern ist der Brandschutz bzw. der Funktionserhalt im Brandfall von zentraler Bedeutung. Anlagen müssen insbesondere im Brandfall zwingend funktionieren, um Notfallmassnahmen und Evakuierungen ungehindert ausführen zu können. Bis zum Abschluss dieser Massnahmen sollen die Energieversorgung über die Kabelkanäle und die Funktionen der genannten Geräte und Vorrichtungen erhalten bleiben. Insbesondere in öffentlichen Gebäuden, Spitälern, Einkaufszentren, Schulen, Hotels und Industrieanlagen werden daher Kabelkanäle und Kabel eingesetzt, die für den Funktionserhalt im Brandfall ausgelegt sind.

In der DIN 4102, die auch für Stromschienensysteme gilt wird der Funktionserhalt in Klassen unterteilt. Alternativ wird auch die Prüfnorm IEC 60331 angewendet. Die Klassenbezeichnung richtet sich wie folgt nach der Dauer innerhalb der der Funktionserhalt gewährleistet ist:
E30 - Funktionserhalt von 30 Minuten
E60 - Funktionserhalt von 60 Minuten
E90 - Funktionserhalt von 90 Minuten

Bei gekapselten Stromschienen sind die elektrischen Leiter nicht vergossen oder nur in einer relativ dünnen Isolationsschicht eingeschlossen, weshalb im Vergleich zu vergossenen Stromschienen ein reduzierter Funktionserhalt resultiert.

Die Installation von Leitungen, Einrichtungen und Geräten am und im Baukörper wird traditionellerweise Monteuren auf der Baustelle überlassen, die nicht auf die Installation von Stromschienen spezialisiert sind und die fallweise die benötigten Befestigungs- und Montagemittel beschaffen. Zum Anheben von schweren Stromschienen mit einem Gewicht von über 50 kg werden Hebevorrichtungen verwendet.

[3], EP1589627B1, offenbart eine Befestigungsvorrichtung und eine Hebevorrichtung, die der Installation von Stromschienen im Bereich der Decke eines Gebäudes dienen. Die Befestigungsvorrichtung umfasst mit der Decke verbindbare, vertikal ausgerichtete Gewindestangen und ein zum Tragen wenigstens einer Stromschiene dienendes Tragelement. Das Tragelement ist derart an der Unterseite der Gewindestangen montierbar und demontierbar, dass die zu installierende Stromschiene, vor der Montage des Tragelements, senkrecht von unten zwischen die Gewindestangen einführbar, das Tragelement nach dem Einführen der Stromschiene mit der Gewindestangen verbindbar und die eingeführte Stromschiene anschliessend auf das Tragelement absenkbar ist.

Aus [4], EP1905723B1, ist eine weitere Hebevorrichtung bekannt, die ein von einer Antriebsvorrichtung anziehbares Zugelement aufweist, mittels dessen wenigstens eine damit gehaltene Stromschiene zu einer Befestigungsvorrichtung hochgezogen werden kann. Die Hebevorrichtung umfasst ein Kopfstück, das mittels Verbindungselementen mit der Befestigungsvorrichtung verbindbar ist und das wenigstens eine Umlenkrolle aufweist, über die das Zugelement umlenkbar ist, sowie eine Hilfsvorrichtung, die mit der Antriebsvorrichtung und dem Kopfstück lösbar verbunden ist, mittels der die beim Anheben der Stromschiene über das Zugelement auf die Antriebsvorrichtung einwirkende Kraft kompensierbar ist.

Gemäss [3] werden die Stromschienen nach der Installation, z.B. mittels Schrauben, bezüglich der Höhe und der Neigung justiert, um eine präzise gegenseitige Ausrichtung von miteinander zu verbindenden Stromschienen zu erzielen. Gemäss [3] ist zu berücksichtigen, dass Stromschienen kurze, relativ dicke (z.B. 10 mm) und hohe (bis zu 25 cm) Anschlusslaschen aufweisen, die mit engen Toleranzen gefertigt sind, wobei zwischen den Anschlusslaschen wenig Spielraum vorhanden ist. Die gegenseitige Kopplung von Stromschienen erfordert daher Präzisionsarbeit. Insbesondere die Montage der Kupplung zur Verbindung der Anschlusslaschen erfordert vorgängig ein präzises gegenseitiges Ausrichten der einzelnen Stromschienenbauteile.

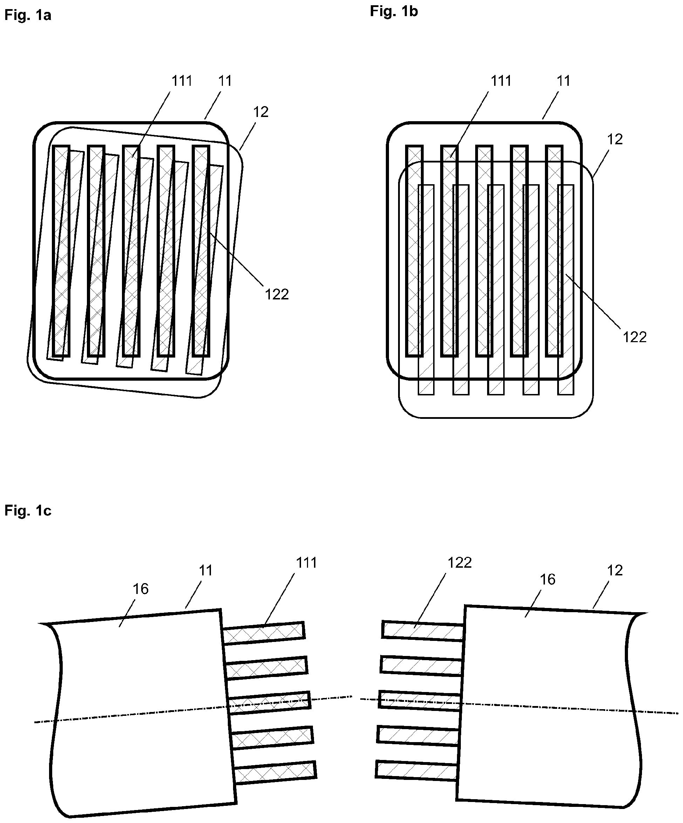

Nach dem Hochziehen der Stromschienen treten jedoch regelmässig die in den Figuren 1a, 1b und 1c dargestellten Fehlausrichtungen der Stromschienen auf. Die beiden in Fig. 1a schematisch dargestellten Stromschienen 1A', 1B' sind gegeneinander verkantet bzw. verdreht. Die beiden in Fig. 1b gezeigten Stromschienen 1A', 1B' sind nicht in einer Ebene ausgerichtet; d.h. deren Achsen sind parallel ausgerichtet, jedoch vertikal und horizontal gegeneinander verschoben. Die beiden in Fig. 1c gezeigten Stromschienen 1A', 1B' sind nicht achsparallel zueinander ausgerichtet. Typischerweise treten diese Fehlausrichtungen in Kombination auf. Z.B. sind die zu verbindenden Stromschienen gegeneinander verdreht und nicht achsparallel ausgerichtet.

Das Ausrichten der Stromschienen z.B. mittels Wasserwagen ist dabei mit Schwierigkeiten verbunden. Bei der Justierung der Befestigungsvorrichtung hinsichtlich eines Parameters können daher wieder andere Parameter beeinträchtigt werden. Sofern nur ein Monteur anwesend ist, so muss er sich jeweils zwischen den verschiedenen Befestigungsvorrichtungen bewegen, um die Justierungen iterativ vorzunehmen. Insgesamt resultieren erhebliche Aufwendungen bei der Installation der Stromschienen.

Einerseits resultiert ein hoher Aufwand zur präzisen Ausrichtung der angehobenen Stromschienen. Der Installateur muss gegebenenfalls auf einer Leiter stehend die schweren Stromschienen ausrichten. Dies ist mit Schwierigkeiten verbunden, da die Stromschienen nahe der Decke von Hebevorrichtungen gehalten sind, die einer Justierung entgegenwirken. Oft muss die Hebevorrichtung bewegt werden, um eine notwendige Justierung überhaupt ausführen zu können. Gleichzeitig muss der Installateur die mehrteilige elektrische Kopplungsvorrichtung handhaben, um die elektrische und mechanische Verbindung zu erstellen. Während der Erstellung elektrischen Verbindung können daher stets starke mechanische Kräfte auf die Verbindungskontakte einwirken, weshalb die Montagearbeit behindert wird und Verkantungen verbleiben können.

Sofern Verkantungen verbleiben, wie sie in den Figuren 1a, 1b und 1c gezeigt sind, können mangelhafte elektrische Verbindungen resultieren, die Störungen oder Ausfälle verursachen können. Besonders kritisch sind dabei nicht Totalausfälle, sondern Mängel, die kaum lokalisierbar sind. Durch eine unpräzise Ausrichtung der Stromschienen können z.B. anstelle von flächigen Verbindungen, Verbindungen über punktuelle oder linienförmige Kontaktbereiche erfolgen, deren Temperatur vom aktuellen Stromfluss abhängig ist. Daraus resultierende Temperaturdehnungen können sporadisch zu Störungen führen.

Die EP0547473A1 offenbart ein Verfahren zur Montage von vertikal angeordneten Schienenabschnitten von Schienenverteilern für die Energieverteilung und eine Stützvorrichtung hierfür.

Der Aufbau von Stromschienen der eingangs genannten Art sowie deren Einsatzgebiete sind ferner im Produktkatalog "Solid insulated bus bar type TPL - For safety critical applications", Tefelen, 29.04.2016, beschrieben.

Aus [5], EP3038222A1, sind ein Stromschienensystem mit Stromschienen zur Energieverteilung in einem Gebäude sowie eine Gebäudeinstallation mit einem solchen Stromschienensystem bekannt. Das Stromschienensystem umfasst wenigstens eine erste und eine zweite Stromschiene mit Leitungsstäben, die in einen Stromschienenkörper eingebettet sind und die je von einem ersten Anschlussbereich an einem ersten Endstück der Stromschiene zu wenigstens einem zweiten Anschlussbereich an einem zweiten Endstück der Stromschiene geführt und endseitig mit Anschlüssen versehen sind. Die beiden Stromschienen sind durch eine Stromschienenkupplung miteinander verbunden, die wenigstens einen deformierbaren elektrischen Leiter aufweist, durch den die Anschlüsse der einander zugewandten Stromschienen derart miteinander verbunden sind, dass Temperaturdehnungen der Stromschienen kompensierbar sind.

Die Stromschienen sind dabei je auf einen Ausleger abgestützt und erstrecken sich jeweils über eine ganze Etage. Es sind somit relativ lange und schwere Stromschienen erforderlich, die individuell an die Höhe der Etagen angepasst sind.

Der vorliegenden Erfindung liegt daher die Aufgabe zugrunde, ein verbessertes Stromschienenmodul zu schaffen, das in einer Gussmasse eingeschlossene Leitungsstäbe aufweist. Ferner ist ein verbessertes Stromschienensystem mit solchen Stromschienenmodulen anzugeben.

Erfindungsgemässe Stromschienenmodule sollen mit geringem Aufwand präzise installiert werden können. Insbesondere soll der Aufwand zur präzisen Ausrichtung benachbarter Stromschienen reduziert werden.

Die elektrische Verbindung einzelner Stromschienen und Stromschienenmodule soll vollzogen werden können, ohne dass störende Kräfte auf die elektrischen Kontakte einwirken. Die elektrischen Kontakte sollen einfach geprüft und gereinigt werden können. Die elektrische Verbindung zwischen den Stromschienen soll mit einfachen Massnahmen in optimaler Qualität erstellt werden können. Dabei sollen flächige Kontaktverbindungen resultieren, die unabhängig von auftretenden Temperaturdehnungen eine optimale Verbindungsqualität garantieren.

Das Stromschienensystem soll mit geringem Aufwand aufgebaut werden können. Dabei sollen einerseits ein geringer Herstellungsaufwand und andererseits ein geringer Installationsaufwand für die Stromschienen unabhängig von der Länge oder Höhe des Stromschienensystems resultieren. Insbesondere sollen Stromschienensysteme in Hochhäusern vorteilhaft realisiert werden können.

Dabei sollen Anpassungen an die Etagenhöhe mit geringem Aufwand möglich sein. Für die Realisierung unterschiedlicher Stromschienensysteme soll daher eine möglichst geringe Anzahl unterschiedlicher Stromschienen gefertigt werden müssen.

Diese Aufgabe wird mit einem Stromschienenmodul und einem Stromschienensystem gelöst, welche die in Anspruch 1 bzw. 13 angegebenen Merkmale aufweisen. Vorteilhafte Ausgestaltungen der Erfindung sind in weiteren Ansprüchen angegeben.

Das Stromschienenmodul umfasst wenigstens eine erste und eine zweite Stromschiene, die in einem Stromschienenkörper eingegossene Leitungsstäbe aufweisen, deren Endstücke je an verschiedenen Enden aus dem zugehörigen Stromschienenkörper hervortreten und von denen die einander zugewandten Endstücke durch elektromechanische Verbindungsmittel miteinander verbunden sind.

Die Stromschienenkörper der beiden Stromschienen sind an den einander zugewandten Enden durch mechanische Verbindungsmittel, vorzugsweise je mittels wenigstens einer Schraubengarnitur, mechanisch miteinander verbunden, sodass die Stromschienen einerseits durch die mechanische Verbindung und andererseits durch die elektrische Verbindung, die voneinander getrennt sind, miteinander verbunden sind. Das resultierende Stromschienenmodul kann symmetrisch oder vorteilhaft auch asymmetrisch ausgestaltet sein und umfasst in besonders bevorzugten Ausgestaltungen zwei oder drei Stromschienen.

Der Erfindung liegt der Gedanke zugrunde, dass vor der elektrischen Verbindung der Stromschienen die präzise gegenseitige Ausrichtung der Stromschienen von zentraler Bedeutung ist. Erfindungsgemäss werden zwei erfindungsgemässe Stromschienen daher zuerst mechanisch miteinander verbunden, bevor die elektrische Verbindung erstellt wird. Da die elektrisch zu verbindenden Stromschienen präzise ausgerichtet und durch die mechanische Verbindung mechanisch stabil gehalten sind, kann die elektrische Verbindung rasch und in hoher Qualität erstellt werden. Die Anschlusskontakte liegen frei und können geprüft und gereinigt werden. Ein Verkanten der Anschlusskontakte wird vermieden, weshalb die Kontakte flächig aneinander anliegen und eine optimale Verbindungsqualität gewährleisten. Punktuelle Verbindungen, an denen Übergangswiderstände auftreten könnten, werden weitgehend vermieden. Das erfindungsgemässe Stromschienensystem arbeitet daher praktisch ohne Verluste und ohne Störungen, die durch mangelhafte Verbindungen entstehen könnten. Die elektrische Verbindung ist keinen mechanischen Belastungen ausgesetzt und kann daher besonders vorteilhaft dimensioniert werden. Grundsätzlich können die Endstücke der Leitungsstäbe, d.h. die Anschlusskontakte auch durch Steckverbinder miteinander verbunden werden. Vorzugsweise werden jedoch Verbindungen mittels Schraubgarnituren und Anschlussplatten realisiert.

Die Ausrichtung und mechanische Verbindung der Stromschienen im ersten Installationsschritt kann mit minimalem Aufwand erfolgen. Die Stromschienen können in Position gebracht, ausgerichtet und mit einfachen Massnahmen stabil miteinander verbunden werden. Dieser Vorgang kann durch entsprechende Formgebung der Stromschienenkörper noch erleichtert werden.

Während des Vorgangs zur elektrischen Verbindung der mechanisch miteinander verbundenen Stromschienen sind die Anschlusskontakte somit bereits präzise ausgerichtet. Der Installateur kann sich allein auf die Arbeit zur Erstellung der elektrischen Kontakte konzentrieren, ohne dass störende Kräfte einwirken. Dies erlaubt einen raschen, präzisen und sicheren Arbeitsvorgang.

Die erfindungsgemässe Lösung kann unabhängig von der Ausgestaltung der Leitungsstäbe und Anschlusskontakte realisiert werden, die z.B. parallel zur Längsachse der Stromschiene ausgerichtet sind und frontseitig oder rückseitig aus dem Stromschienenkörper hervortreten und/oder die senkrecht oder schräg zur Längsachse der Stromschiene ausgerichtet sind und seitlich aus dem Stromschienenkörper hervortreten. Ferner kann vorgesehen werden, dass erste Anschlusskontakte an einem Ende der Stromschiene parallel zur Längsachse der Stromschiene ausgerichtet sind und frontseitig oder rückseitig aus dem Stromschienenkörper hervortreten und zweite Anschlusskontakte am anderen Ende der Stromschiene senkrecht oder schräg zur Längsachse der Stromschiene ausgerichtet sind und seitlich aus dem Stromschienenkörper hervortreten.

Die Stromschienen der Stromschienenmodule können I-förmig mit ersten und zweiten Anschlusskontakten entlang der Längsachse ausgerichtet, L- förmig mit ersten Anschlusskontakten entlang der Längsachse ausgerichtet und zweiten Anschlusskontakten senkrecht zur Längsachse ausgerichtet oder U- förmig mit ersten und zweiten Anschlusskontakten senkrecht zur Längsachse ausgerichtet ausgestaltet sein. Der Stromschienenkörper kann die Anschlusskontakte an einem oder an beiden Enden überragen, sodass einseitig oder beidseitig der Anschlusskontakte ein Kopplungsbereich für die mechanischen Verbindungsmittel geschaffen wird. Alternativ können die Isolationskörper im Bereich der Endstücke der Leitungsstäbe auch breiter ausgebildet sein, sodass neben den Endstücken der Leitungsstäbe Montagebohrungen vorgesehen werden können.

Vorzugsweise weist der Stromschienenkörper wenigstens ein Formteil auf, durch das eine formschlüssige Verbindung mit dem parallel oder koaxial dazu ausgerichteten Stromschienenkörper der benachbarten Stromschiene erstellbar ist, der vorzugsweise ein dazu komplementäres Formteil aufweist. Verbindungsmittel, wie Flanschelemente, Bohrungen, Nocken oder Rippen können in diesem Fall besonders einfach und vorteilhaft in den Isolationskörper eingegossen werden. Das Formteil bildet wenigstens eine Einformung oder wenigstens eine Ausformung, wie eine Bohrung, ein Nocken oder eine Rippe, mittels der der Stromschienenkörper gegenüber dem Stromschienenkörper der benachbarten Stromschiene in einer Richtung oder in einer Ebene fixierbar ist. Auf diese Weise können die Stromschienenkörper besonders einfach miteinander verbunden werden.

In einer weiteren vorzugsweisen Ausgestaltung umfasst der Stromschienenkörper wenigstens eine Anformung, wie eine Flanschplatte, die dem Halten wenigstens eines der mechanischen Verbindungsmittel dient und/oder die mit wenigstens einer dazu korrespondierenden Anformung, die am Stromschienenkörper der benachbarten Stromschiene vorgesehen ist, verbindbar oder formschlüssig koppelbar ist. Diese Anformungen können die Anschlusskontakte überragen und ineinander eingreifen oder auch neben den Anschlusskontakten angeordnet sein.

Die Stromschienenkörper können besonders vorteilhaft mit einer oder mehreren Längsrippen versehen werden, die derart ineinander eingreifen, dass die Stromschienenkörper nur noch parallel zueinander verschiebbar und mittels Verbindungselementen, z.B. einer Schraubengarnitur, an einer geeigneten Position gegenseitig fixierbar sind. Vorteilhaft können die Stromschienenkörper auch mit zueinander komplementären Formteilen, wie Nocken, Zapfen und Öffnungen, versehen sein, die ineinander eingefügt werden können, um die Stromschienenkörper in einer Ebene zu fixieren. Vorzugsweise werden die Stromschienenkörper mit Formteilen versehen, die ineinander einrasten können. Bei einem gegossenen Stromschienenkörper können diese Formteile in einfacher Weise in einer entsprechenden Gussform realisiert werden.

In bevorzugten Ausgestaltungen sind die Leitungsstäbe U-förmig ausgebildet, sodass deren Endstücke senkrecht zur Längsachse der Stromschiene ausgerichtet sind. Die Enden von benachbarten Stromschienen können daher derart nebeneinander angeordnet werden, dass zueinander korrespondierende Endstücke der Leitungsstäbe nebeneinander liegen, parallel zueinander ausgerichtet sind und durch Verbindungsplatten in einfacher Weise miteinander verbunden werden können.

Das Stromschienensystem umfasst wenigstens zwei Stromschienenmodule, die durch eine Stromschienenkupplung miteinander verbunden sind, die deformierbare elektrische Leiter aufweist, durch die die einander zugewandten Endstücke der Leitungsstäbe der Stromschienen derart miteinander verbindbar sind, dass die beiden Stromschienen elektrisch miteinander gekoppelt und mechanisch ganz oder teilweise voneinander entkoppelt sind.

Durch die mechanische Verbindung der Stromschienen eines Stromschienenmoduls kann dieses stabil und mit hochwertigen elektrischen Verbindungen aufgebaut und nach Bedarf dimensioniert werden. Durch die elastische Verbindung der Stromschienenmodule des Stromschienensystems kann dieses schrittweise modular aufgebaut und kann in einfacher Weise über grössere Distanzen, z.B. in Leitungsschächten von Hochhäusern installiert werden.

In einem Gebäude mit mehreren Etagen, kann das Stromschienensystem z.B. in einem Gebäudeschacht, derart installiert werden, dass jeder Etage eines der Stromschienenmodule zugeordnet ist. Die Stromschienenmodule werden dazu vorzugsweise T-förmig ausgebildet mit einer Längsschiene und wenigstens einer Querschiene, die gegebenenfalls in einer Maueröffnung, auf einem Ausleger und/oder weiteren Montagemitteln ortsfest gehalten und durch die Maueröffnung in die zugehörige Etage des Gebäudes hinein geführt wird. Jedes Stromschienenmodul ist daher einer Etage oder einem Gebäudebereich zugeordnet und versorgt diesen mit Energie. Durch die elastische Verbindung der einzelnen Stromschienenmodule erhält das Stromschienensystem eine Elastizität, die über beliebige Längen oder Höhen alle auftretenden Veränderungen kompensiert. Temperaturdehnungen werden ebenso aufgefangen wie Erschütterungen und Vibrationen, die z.B. bei einem Erdbeben auftreten können. Die Stromschienenmodule können dabei beliebig konfektioniert werden, um die erforderlichen Distanzen zwischen zwei Etagen zu überwinden. Dabei können zwei, drei oder auch mehr Stromschienen stabil zu einem Stromschienenmodul zusammengefügt werden.

Die erfindungsgemässe Stromschiene zeichnet sich zudem durch einen verbesserten Funktionserhalt im Brandfall aus. Wärmesensitive Anschlusskästen können in der kritischen Zone, d.h. innerhalb eines Leitungsschachts, vermieden werden. Durch die T-Abgänge bzw. Querschienen, die durch die Schachtwand hindurch geführt sind, können die Anschlusskästen in Räumen, die im Vergleich zum Leitungsschacht besonders gesicherten und geschützt sind. In der kritischen Zone des Leitungsschachts befinden sich somit nur die vergossenen Stromschienen, die aufgrund ihres Aufbaus gegen Brandeinwirkungen hervorragend geschützt sind. Die Funktionsklasse E90 kann durch das erfindungsgemässe System daher relativ leicht erreicht oder gar übertroffen werden.

Das erfindungsgemässe Stromschienensystem ist daher nicht nur modular aufgebaut, sondern erlaubt auch die thermisch getrennte Anordnung der Systemteile in unterschiedlichen Zonen. Durch die Anordnung der Anschlusskästen in leicht zugänglichen, aber gut gesicherten Räumen resultieren ferner Vorteile bei der Installation und Wartung des Systems. Im Leitungsschacht, der weniger gut zugänglich ist, reduziert sich der Installation Aufwand. Der Wartungsaufwand entfällt praktisch vollständig. Sofern ein einzelnes Stromschienenmodul trotzdem einen Mangel aufweisen sollte, kann dieses wiederum mit relativ geringem Aufwand ausgetauscht werden.

Besonders wesentlich ist ferner, dass nicht nur die Stromschienen selbst gegen Brandeinwirkung geschützt sind, sondern die Befestigungsvorrichtungen, mittels denen diese installiert werden. Mit den erfindungsgemässen Stromschienenmodulen resultiert dabei der Vorteil, dass die Befestigungsvorrichtungen nur relativ geringen Belastungen ausgesetzt sind, weshalb bei höheren Temperaturen entsprechend geringe Dehnungen auftreten. Das Stromschienensystem kann hingegen leicht optimiert werden, indem die Stromschiene selbst die Befestigungsvorrichtung in Brandschutzmaterial, z.B. Brandschutzplatten oder Brandschutzbeschichtungen, eingeschlossen wird, dass z.B. aus Mineralwolle oder weiteren brandresistenten Materialien besteht. Aufgrund des einfachen Aufbaus der Befestigungsvorrichtung, die in vorzugsweisen Ausgestaltungen stabile Montagestangen aufweist, kann diese besonders einfach und mit wenig Aufwand und Material geschützt werden.

Mittels Montagestangen können die Stromschienenmodule besonders vorteilhaft montiert werden. Vor der Installation des Stromschienensystems werden eine Durchtrittsöffnung für den T-Abgang bzw. die Querschiene sowie Bohrungen zur Verankerung der Montagestangen vorgesehen. In der Folge können die Stromschienenmodule in einfacher Weise montiert werden, indem die fixierten Montagestangen durch die Öffnungen im Stromschienenkörper geführt werden. Sofern die Montagestange ein Gewinde aufweist, kann das installierte Stromschienenmodul mittels Schraubenmuttern fixiert werden. Die Montagestange ist bereits durch die Wand und den Stromschienenkörper gegen Brandeinwirkung geschützt, weshalb zwischen Wand und Schienenkörper ein einfaches Isolationsrohr aufgesetzt werden kann, um die Befestigungsvorrichtung wirkungsvoll gegen Brandeinwirkung zu schützen. Auf diese Weise können Stromschienenmodul nicht nur besonders einfach montiert, sondern auch optimal gegen Brandeinwirkung geschützt werden.

Nachfolgend wird die Erfindung anhand von Zeichnungen näher erläutert. Dabei zeigt:
- Fig. 1a: zwei achsparallel zueinander ausgerichtete Stromschienen 11, 12, die um die Längsachse gegeneinander verdreht sind;
- Fig. 1b: zwei achsparallel zueinander ausgerichtete Stromschienen 11, 12, die vertikal gegeneinander verschoben sind; und
- Fig. 1c: die Endstücke von zwei Stromschienen 11, 12, die nicht achsparallel zueinander ausgerichtet sind;
- Fig. 2a: zwei voneinander getrennte Stromschienen 11, 12 mit einander zugewandten Enden, die mit zueinander komplementären Formteilen 4 versehen sind und aus denen die parallel zueinander ausgerichteten Endstücke 111, 122 der Leitungsstäbe je seitlich aus dem Stromschienenkörper 16 herausragen;
- Fig. 2b: die zwei Stromschienen 11, 12 von Fig. 2a, die einerseits mechanisch durch mechanische Verbindungsmittel 6 bzw. 6A, 6B oder 6C und andererseits elektrisch durch elektromechanische Verbindungsmittel 2, 21, 22 zu einem erfindungsgemässes Stromschienenmoduls 1 zusammengefügt wurden;
- Fig. 3a: ein weiteres erfindungsgemässes Stromschienenmodul 1 mit zwei teilweise gezeigten Stromschienen 11, 12, die an unterschiedlichen Stellen mechanisch und elektrisch miteinander verbunden sind;
- Fig. 3b: das Stromschienenmodul 1 von Fig. 3a aus einem anderen Blickwinkel;
- Fig. 4: die Explosionsdarstellung eines erfindungsgemässen Stromschienenmoduls 1, welches zwei entlang deren Längsachse y ausgerichtete I-Profil- oder U-Profil-förmige Stromschienen 12, 13 aufweist, die durch eine T-Profil-förmige Stromschiene 11 miteinander verbunden werden, die eine parallel zur Längsachse y ausgerichtete Längsschiene 116 und eine senkrecht zur Längsschiene 116 ausgerichtete Querschiene 115 aufweist;
- Fig. 5: ein Stromschienensystem 10 mit dem zusammengesetzten Stromschienenmodul 1 von Fig. 4, das beidseitig mittels Stromschienenkupplungen 3, die deformierbare elektrische Leiter 31, 32, 33, 34 aufweisen, elastisch mit benachbarten Stromschienenmodulen 1', 1''verbunden wird;
- Fig. 6: das in einem Schacht 89 eines Gebäudes 8 installierte Stromschienensystem 10 von Fig. 5 mit der durch eine Wandöffnung 90 hindurch geführten Querschiene 115 der T-Profil-förmigen Stromschiene 11, die zu einem Anschlusskasten 7 geführt ist, von dem die elektrischen Vorrichtungen in der betreffenden Etage 81 des Gebäudes 8 mit Strom versorgt werden;
- Fig. 7: eine Detaildarstellung des Stromschienensystems 10 von Fig. 6 mit dem ortsfest montierten Stromschienenmodul 1;
- Fig. 8a: das Stromschienenmodul 1 von Fig. 4 mit einer T-Profil-förmigen Stromschiene 11, deren Querschiene 115 exzentrisch auf der Längsschiene 116 angeordnet ist;
- Fig. 8b: das Stromschienenmodul 1 von Fig. 8a um 180° gewendet; und
- Fig. 9: ein Stromschienensystem 10 mit Stromschienenmodulen 1', 1, 1", die eine I- oder U-Profil-förmige Stromschiene 12 und eine T-Profil-förmige Stromschiene 11 aufweisen.

Fig. 1a zeigt zwei achsparallel ausgerichtete Stromschienen 11, 12, die gegeneinander verdreht sind. Fig. 1b zeigt zwei achsparallel ausgerichtete Stromschienen 11, 12, die vertikal gegeneinander verschoben sind. Fig. 1c zeigt die Endstücke von zwei Stromschienen 11, 12, die nicht achsparallel zueinander ausgerichtet sind. Diese nicht selten auftretenden Fehlausrichtungen haben zur Folge, dass bei der Verbindung der Anschlusskontakte bzw. der Endstücke 111, 122 der Leitungsstäbe keine optimale Verbindungsqualität resultiert.

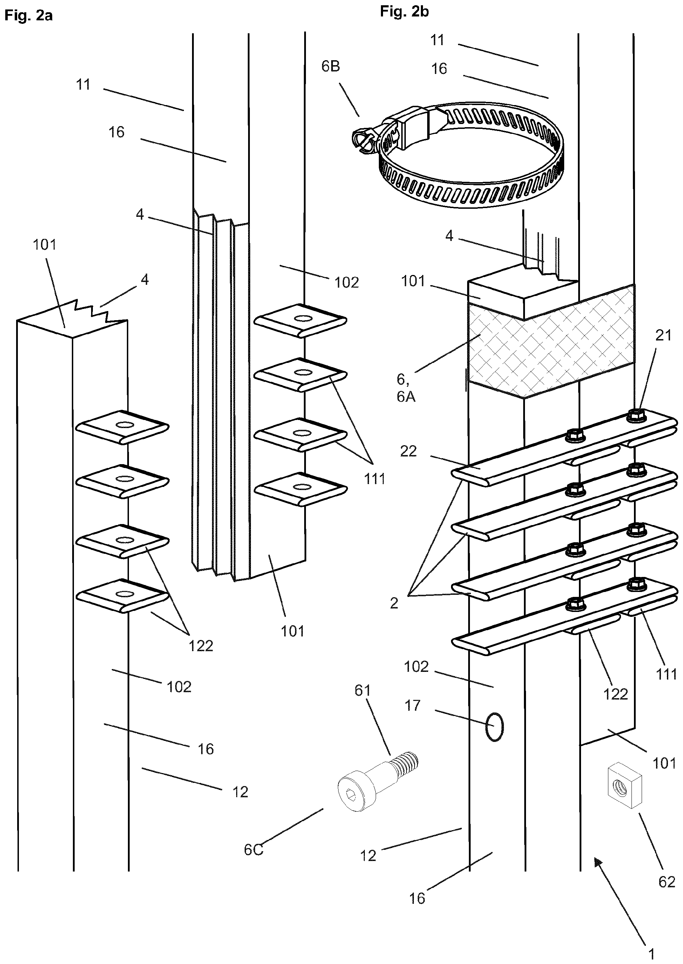

Fig. 2a zeigt teilweise zwei voneinander getrennte Stromschienen 11, 12, die einen aus einem Isolationsmaterial, wie Giessharz oder Polymerbeton, geformten Stromschienenkörper 16 aufweisen. Das Gewicht der Stromschienen 11, 12 liegt je nach Stromschienentyp typischerweise im Bereich von rund 7kg/m bis 90kg/m. Das Volumen der Stromschienen 11, 12 liegt typischerweise im Bereich von 0.003 m3/m bis 0.03 m3/m. Die Stromschienen 11, 12 werden typischerweise im Niederspannungsbereich z.B. bei 1000 V oder im Mittelspannungsbereich z.B. zwischen 3kV und 10kV eingesetzt.

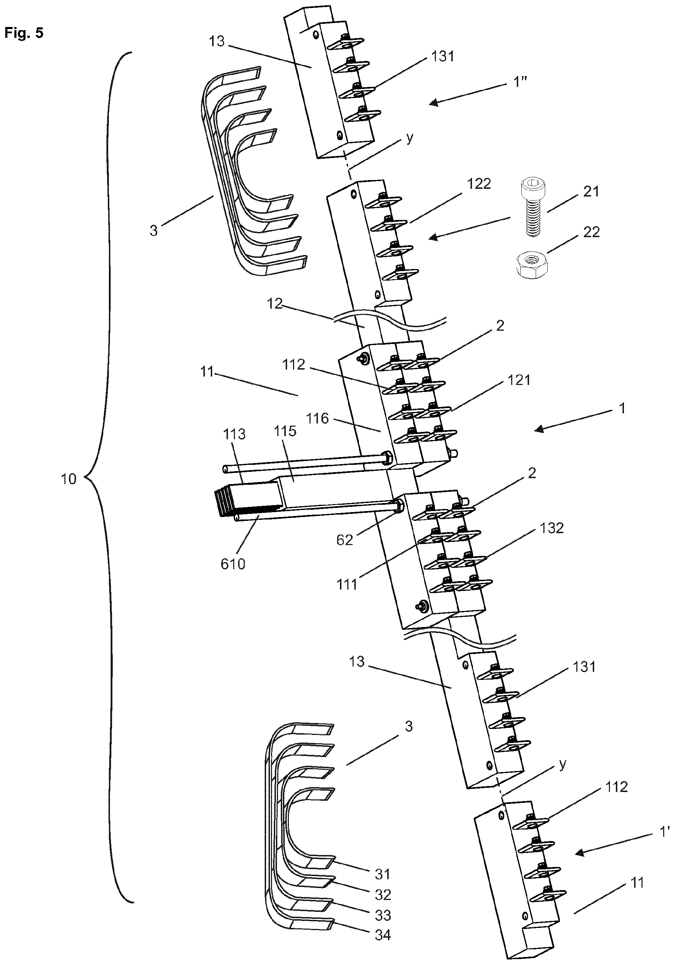

In die Stromschienenkörpern 16 der Stromschienen 11, 12 sind mehrere Leitungsstäbe eingebettet, die seitlich aus den Stromschienenkörpern 16 hervortreten und deren Endstücke 111, 122 Anschlusskontakte bilden. Vorzugsweise werden Leitungsstäbe aus Aluminium oder Kupfer verwendet. Die Anschlusskontakte 111 an einem oberen Ende der ersten Stromschiene 11 sind durch elektromechanische Verbindungsmittel 2 mit Anschlusskontakten 122 an einem unteren Ende der zweiten Stromschiene 12 verbindbar. Dazu sind die Anschlusskontakte 111, 122 z.B. mit Öffnungen versehen, durch die Anschlussschrauben 21 geführt werden können, mittels denen Anschlussplatten 2 (siehe Fig. 2b) oder Verbindungsplatten 2 (siehe Fig. 5) festgeschraubt werden können. Anschlussplatten 2 werden z.B. dann verwendet, wenn daran Anschlusskabel angeschlossen werden sollen.

Damit die elektrischen Verbindungen problemlos erstellt werden können, werden die Stromschienenkörper 16 der beiden Stromschienen 11, 12 zuvor präzise gegeneinander verschoben und ausgerichtet und anschliessend mechanisch miteinander verbunden, so dass sie praktisch eine Einheit und somit ein Stromschienenmodul 1 bilden. Dieser Vorgang ist besonders einfach, da die mechanische Verbindung unabhängig von der elektrischen Verbindung erfolgen kann. Die belastbare mechanische Verbindung erfolgt nicht über die Anschlusskontakte 111, 122 sondern durch eine direkte mechanische Verbindung, die auf unterschiedliche Weise vorteilhaft realisiert werden kann. Auf die Verwendung von Wasserwaagen bei der Erstellung der elektrischen kann daher verzichtet werden.

Zur mechanischen Verbindung der Stromschienenkörper 16 sind verschiedene mechanische Verbindungsmittel 6, 6A, 6B, 6C einsetzbar. Besonders einfach und präzise kann die Verbindung zwischen den Stromschienenkörpern 16 der beiden Stromschienen 11, 12 erfolgen, wenn diese mit zueinander korrespondierenden Formteilen 4 versehen sind. Fig. 2a zeigt, dass die Stromschienenkörper 16 an den einander zugewandten Seiten mit Rippen, Rillen oder Furchen versehen sind, die sich parallel zur Längsachse der Stromschienenkörper 16 erstrecken. Die Formteile sind komplementär zueinander ausgebildet, sodass die Stromschienenkörper 16 präzise gegeneinander ausgerichtet, formschlüssig und spielfrei miteinander verbunden und gegebenenfalls nur noch axial gegeneinander verschoben werden können. In der Folge können die Stromschienenkörper 16 durch einfache Verbindungsmittel 6 gegenseitig fixiert werden, die in einem Kopplungsbereich montiert werden, der vor, nach und/oder neben den Anschlusskontakten 111, 122 liegt. Verbindungsplatten 22 können anschliessend auf die ausgerichteten Anschlusskontakte 111, 122 aufgelegt und durch Schrauben 21 und Schraubenmuttern 22 verschraubt werden. Nach der mechanischen Verbindung der Stromschienenkörper 16 kann die elektrische Verbindung daher mit geringem Aufwand bequem und präzise durchgeführt werden.

Fig. 2b zeigt ein Stromschienenmodul 1 mit den zwei Stromschienen 11, 12 von Fig. 2a, die einerseits mechanisch durch mechanische Verbindungsmittel 6, 6A, 6B 6C und andererseits elektrisch durch elektromechanische Verbindungsmittel 2, 21, 22 miteinander verbunden sind. Exemplarisch ist gezeigt, dass die zueinander korrespondierenden Kopplungsbereiche 101, 102 der Stromschienenkörper 16 mit einfachen Mitteln miteinander verbindbar sind. Oben ist gezeigt, dass die Kopplungsbereiche 101, 102 durch ein Band 6A, z.B. eine Klebeband, oder durch ein Spannelement 6B, wie einen Spannring, miteinander verbindbar sind. Auf der Unterseite werden die zueinander korrespondierenden Kopplungsbereiche 101, 102 durch eine Schraubengarnitur 6C miteinander verbunden, die eine Montageschraube 61 und eine Schraubenmutter 62 umfasst, die z.B. in einer Bohrung im Stromschienenkörper 16 verankert wird. Die Montageschraube 61 ist durch eine Bohrung 17 im einen Stromschienenkörper 16 hindurchführbar und in die Schraubenmutter 62 im oder am benachbarten Stromschienenkörper 16 eindrehbar. Alternativ können in den Stromschienenkörpern 16 auch Gewinde vorgesehen sein, die es erlauben, Schrauben 61 oder Gewindestangen einzudrehen.

Die Stromschienen 11, 12 sind in dieser Ausgestaltung der Erfindung identisch ausgebildet. Durch die Verbindung in zwei Kopplungsbereichen 101, 102 beidseits der Anschlusskontakte 111 wird eine besonders stabile Verbindung erstellt. Es ist jedoch auch möglich, bei einer der Stromschienen 1A; 1B auf den frontseitigen Kopplungsbereich 101 zu verzichten. In weiteren Ausgestaltungen kann der Stromschienenkörper 16 auch U-förmig oder auf andere Weise erweitert sein, sodass Montagebohrungen 17 an beliebigen Stellen neben den Anschlüssen 111, 122 vorgesehen werden können.

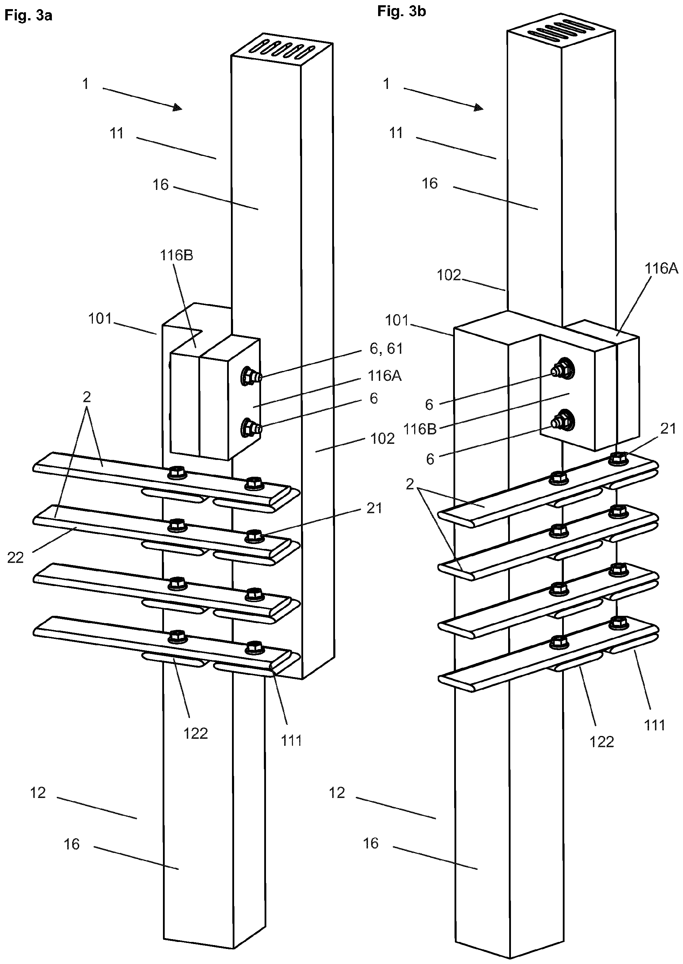

Fig. 3a zeigt ein erfindungsgemässes Stromschienenmodul 1 mit zwei miteinander verbundenen Stromschienen 11, 12 in einer weiteren vorzugsweisen Ausgestaltung. Das vorzugsweise identisch ausgestaltete untere bzw. obere Ende der Stromschienen 11, 12 ist weggeschnitten. Die Stromschienen 11, 12 sind asymmetrisch ausgestaltet und weisen je nur auf einer Seite einen Kopplungsbereich 101 bzw. 102 auf. An diesen Kopplungsbereichen 101, 102 sind stabil ausgeführte Ausformungen 116A, 116B vorgesehen, die es erlauben, die Verbindung zwischen den Stromschienenkörper zu erstellen. Die Ausformungen 116A, 116B bilden Flanschelemente, die durch zwei Schraubverbindungen 6; 61, 62 stabil miteinander verbunden sind. Eine Erhöhung der Stabilität kann erzielt werden, indem die Ausformungen 116A, 116B mit zueinander komplementären Formelementen versehen werden. Z.B. weisen die beiden Ausformungen 116A, 116B an den einander zugewandten Seiten Öffnungen und Zapfen oder Rillen und Nuten auf, die ineinander eingreifen und das Verschieben der beiden Stromschienenkörper 16 verhindern. In diesem Fall können die beiden Flanschelemente bzw. Ausformungen 116A, 116B auch mit nur einer Schraubengarnitur 6C stabil miteinander verbunden werden. Anstelle der Ausformungen 116A, 116B könnten auch Ankerplatten in die Stromschienenkörper eingegossen werden.

Fig. 3b zeigt das Stromschienenmodul 1 von Fig. 3a aus einem anderen Blickwinkel.

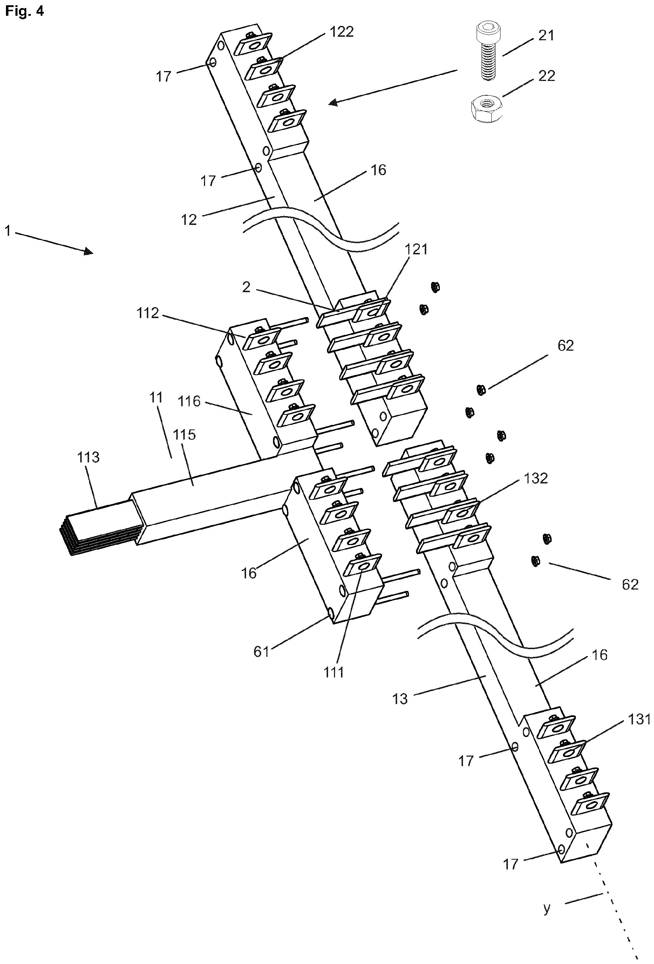

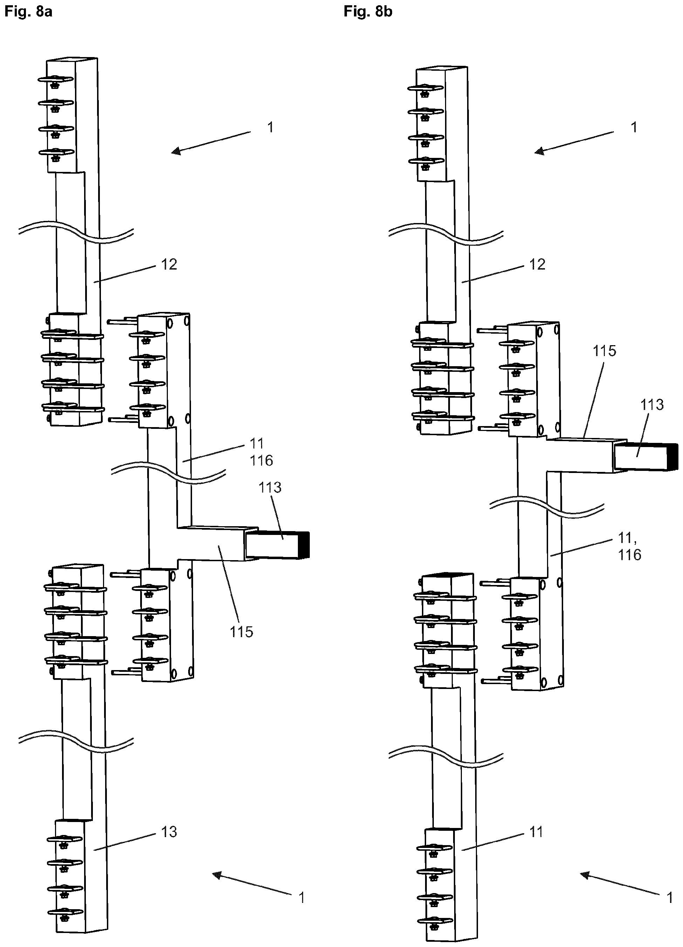

Fig. 4 zeigt die Explosionsdarstellung eines erfindungsgemässen Stromschienenmoduls 1, welches zwei entlang deren Längsachse y ausgerichtete I-Profil- oder U-Profil-förmige Stromschienen 12, 13 aufweist, die durch eine T-Profil-förmige Stromschiene 11 miteinander verbunden werden, die eine parallel zur Längsachse y ausgerichtete Längsschiene 116 und eine senkrecht zur Längsschiene 116 ausgerichtete Querschiene 115 aufweist. Die Längsschiene 116 ist in dieser Ausgestaltung kurz gewählt und dient im Wesentlichen der Verbindung mit den Stromschienen 12, 13. In den Figuren 8a und 8b ist hingegen gezeigt, dass die Längsschiene 116 auch dieselbe Länge wie die Stromschienen 12, 13 aufweisen oder länger sein kann. Weiter ist gezeigt, dass die Längsschiene 116 und die Stromschienen 12, 13 zumindest ansatzweise U-förmig ausgebildet sind, wobei die Stromschienenkörper 16 in den Anschlussbereichen breiter ausgestaltet sind, sodass Montagebohrungen 17 vorgesehen werden können, in die Verbindungsschrauben 61 eingesetzt werden, welche die benachbarten Stromschienenkörper 16 durchdringen und in einem Innengewinde der Stromschienenkörper 16 oder mittels einer Schraubenmutter 62 fixiert werden.

Die T-Profil-förmige Stromschiene 11 weist T-Profil-förmige Leitungsstäbe auf, die sich zwischen Endstücken 111, 112 und 113 erstrecken. Die Endstücke 111, 112, die aus der Längsschiene 116 hervortreten, können mittels elektromechanischen Kopplungsvorrichtungen 2 mit benachbarten Endstücken 132, 121 der Stromschienen 12 und 13 verbunden werden. Die elektrischen und mechanischen Verbindungen erfolgen somit getrennt voneinander.

Fig. 5 zeigt das Stromschienenmodul 1 von Fig. 4 mit den I- oder U-Profil-förmigen Stromschienen 12, 13 und der T-Profil-förmigen Stromschiene 11, nach der mechanischen Verbindung mittels der Schraubengarnituren 61, 62. Schematisch gezeigt sind ferner zwei Stromschienenkupplungen 3, die es erlauben, das Stromschienenmodul 1 mit benachbarten Stromschienenmodulen 1' bzw. 1" zu verbinden. Diese exemplarisch gezeigten Stromschienenkupplungen 3 weisen deformierbare, bandförmige elektrische Leiter 31, 32, 33, 34 auf, durch die die Stromschienenmodule 1', 1, 1" elastisch miteinander koppelbar sind. Kopplungsvorrichtungen dieser Art werden z.B. von Storm Power Components, Decatur, TN 37322, USA, hergestellt. Angeboten werden z.B. geflochtene Metallbänder, insbesondere Kupferbänder, mittels denen flexible Verbindungen mit hoher Leitfähigkeit realisiert werden können.

Die Stromschienenkupplungen 3 werden vorzugsweise in einem Gehäuse oder einer Verkapselung angeordnet und/oder in einer flexiblen Isolationsmasse oder Gussmasse eingegossen. Auf diese Weise werden die elektrischen Kontakte und Verbindungen elektrisch isoliert und gegen das Eindringen von Wasser geschützt. Vorzugsweise wird eine Isolation oder Einhausung verwendet, welche dem Schutzgrad der verwendeten Stromschienen entspricht. Vorzugsweise besteht die Einhausung aus Brandschutzmaterial sodass auch die Stromschienenkupplungen 3 nicht nur dem Schutzgrad IP 68, sondern auch der Brandschutzklasse E90 entsprechen.

Die starren elektrischen Verbindungen können hingegen vorteilhaft in einem Isolationsmaterial, wie Giessharz oder Polymerbeton, eingegossen werden, welches zum Material des Stromschienenkörpers 16 korrespondiert.

In bevorzugten Ausgestaltungen werden die Endstücke der Leitungsstäbe derart bearbeitet, dass eine Interdiffusion verhindert wird. Vorzugsweise erfolgt eine Beschichtung mit einer gut leistungsfähigen metallenen Schutzschicht, welche als Diffusionsbarriere wirkt.

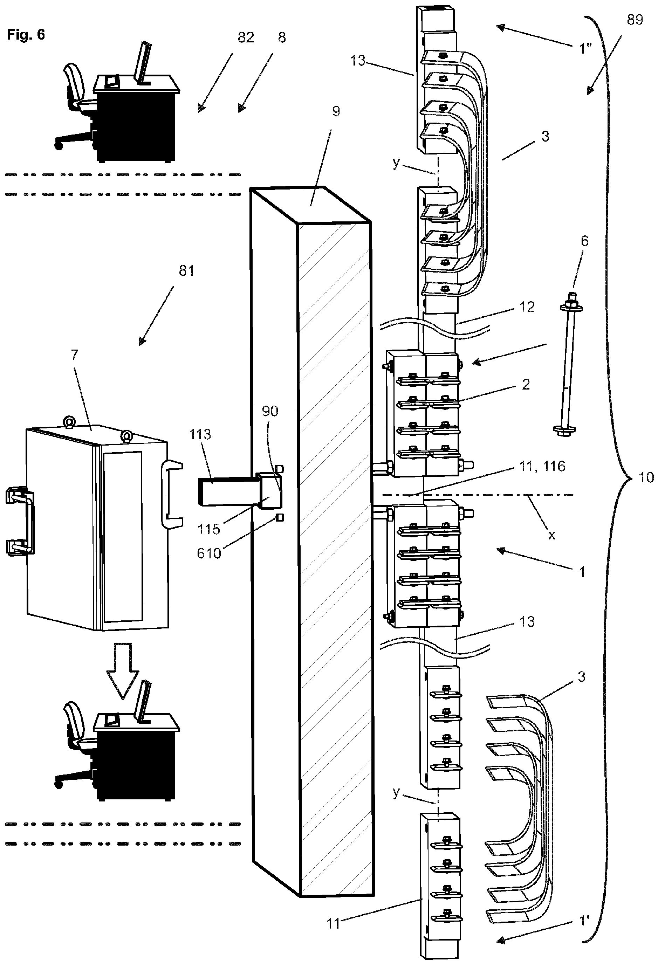

Fig. 6 zeigt schematisch das in einem Leitungsschacht 89 eines Gebäudes 8 installierte Stromschienensystem 10 von Fig. 5 mit der durch eine Wandöffnung 90 hindurch geführten Querschiene 115 der T-Profil-förmigen Stromschiene 11, die zu einem Anschlusskasten 7 geführt ist, von dem die elektrischen Vorrichtungen in der betreffenden Etage 81 des Gebäudes 8 mit Strom versorgt werden, wie dies durch einen Pfeil symbolisch gezeigt ist.

Die senkrecht zur Längsachse y entlang einer Querachse x ausgerichtete Querschiene 115 ist zumindest vertikal unverschiebbar gehalten, was auf verschiedene Weise realisiert werden kann. Die Querschiene 115 kann innerhalb des Leitungsschachts 89 auf einen Ausleger abgestützt sein. Alternativ kann die Querschiene 115 innerhalb der Maueröffnung 90 fixiert bzw. festgemauert sein. Vorzugsweise werden jedoch die gezeigten Montagestangen, vorzugsweise Gewindestangen 610 eingesetzt, die der Verbindung des Stromschienenmoduls 1 dienen und die durch Bohrungen in der Wand 9 hindurch geführt und fixiert werden. Auf diese Weise erfüllen die Gewindestangen 610 vorteilhaft eine Doppelfunktion.

Das Stromschienenmodul 1 ist, wie symbolisch gezeigt, auf der oberen Seite durch eine Stromschienenkupplung 3 elastisch mit dem oberen Stromschienenmodul 1" verbunden, mittels dessen in analoger Weise die obere Etage 82 mit Strom versorgt wird. In gleicher Weise wird das Stromschienenmodul 1 auf der unteren Seite durch eine Stromschienenkupplung 3 elastisch mit dem unteren Stromschienenmodul 1' verbunden. Die Stromschienenmodule 1', 1, 1" können somit in einfacher Weise montiert und elastisch miteinander verbunden werden. Diese schrittweise Montage kann über grosse Distanzen in einfacher Weise erfolgen. Die Stromschienenkupplungen 3 werden vorzugsweise in einer elastischen Gussmasse vergossen und/oder Verkapselung, was mit geringem Aufwand realisierbar ist, wie dies z.B. in der EP1928066A2 beschrieben ist. Durch den vorzugsweisen Einsatz einer flexiblen Gussmasse und flexibler Kopplungsmittel 31, 32, 33, 34 gelingt eine Isolation mit hohem Schutzgrad, vorzugsweise IP 68, und gleichzeitig die Realisierung des Stromschienensystems 10 mit der gewünschten Elastizität. Die Elemente des installierten Stromschienensystems 10 können sich unter Temperatureinwirkung daher beliebig dehnen, ohne dass Spannungen innerhalb des Stromschienensystems 10 auftreten. Sofern ein Hochhaus bzw. Wolkenkratzer einem Erdbeben und somit entsprechenden Dehnungen und Schwingungen ausgesetzt ist, kann das Stromschienensystem 10 die Schwingungen elastisch nachvollziehen, ohne dass Spannungen auftreten.

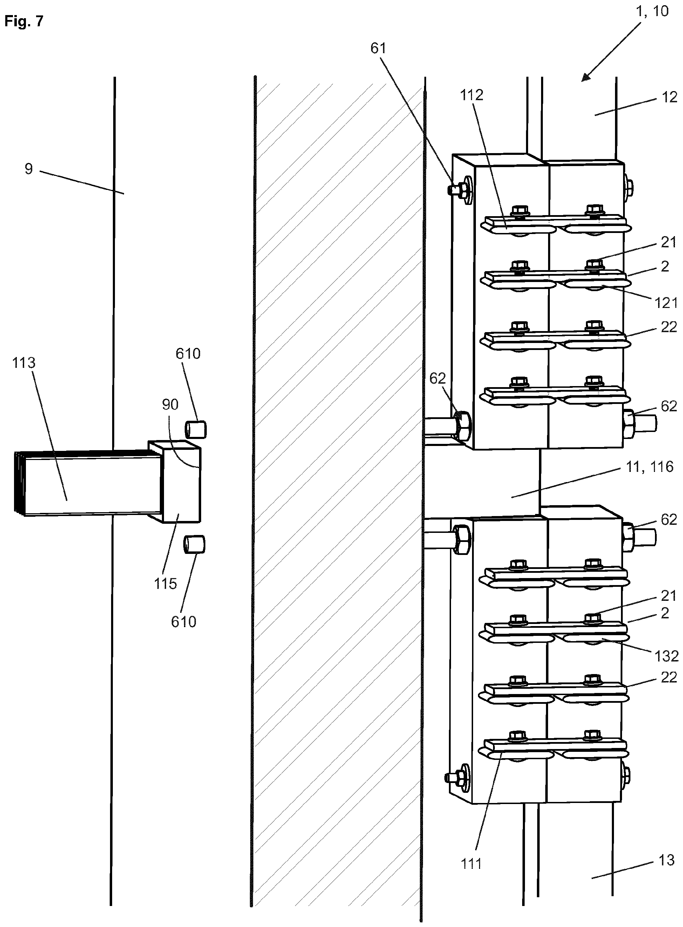

Fig. 7 zeigt eine Detaildarstellung des Stromschienensystems 10 von Fig. 6 mit dem ortsfest montierten Stromschienenmodul 1. Es ist gezeigt, dass das Stromschienenmodul 1 von den Gewindestangen 610 stabil gehalten wird. Gleichzeitig verbinden die mit Schraubenmuttern 62 versehenen Gewindestangen 610 die Stromschienenteile 11, 12, 13 des Stromschienenmoduls 1.

Fig. 8a zeigt das Stromschienenmodul 1 von Fig. 4 mit einer T-Profil-förmigen Stromschiene 11, deren Querschiene 115 exzentrisch auf der Längsschiene 116 angeordnet ist. Fig. 8b zeigt das Stromschienenmodul 1 von Fig. 8a um 180° gewendet. Durch die exzentrische Anordnung der Querschiene 115 ist es möglich, das Stromschienenmodul 1 wahlweise zu drehen, um die Distanz zwischen 2 Maueröffnungen 90 zu überbrücken. Durch diese erhöhte Flexibilität kann der Bedarf an Spezialanfertigungen mit spezieller Dimensionierung der Stromschienenmodule 1 reduziert werden.

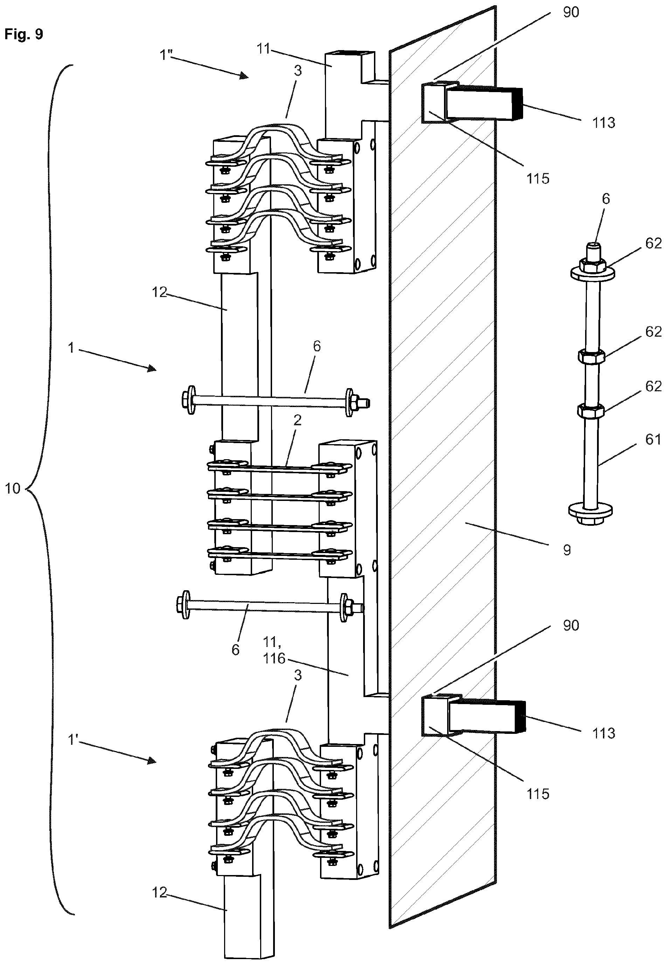

Fig. 9 zeigt schematisch ein Stromschienensystem 10 mit Stromschienenmodulen 1', 1, 1", die eine I- oder U-Profil-förmige Stromschiene 12 und eine T-Profil-förmige Stromschiene 11 aufweisen. Die Stromschienenmodul 1', 1, 1" bestehen in diesem Fall nur aus zwei Stromschienen 11, 12, die entsprechend den Bedürfnissen des Anwenders dimensioniert sind. Durch Kombination von Stromschienenmodulen 1', 1, 1" mit zwei und drei Elementen, deren Querschienen 115 vorzugsweise exzentrisch angeordnet sind, ergeben sich weitere Möglichkeiten zum Zusammenbau eines passenden Stromschienen Systems. Weitere Gestaltungsmöglichkeiten ergeben sich durch die Elastizität des Stromschienensystems 1 und eine passende entsprechende Dimensionierung der Kopplungsvorrichtungen 3 mit entsprechender Wahl der Länge der elastischen Verbindungselemente 31, 32, 33, 34. Mit einer geringen Zahl von unterschiedlichen Modulen 1 können daher beliebige Stromschienensystem 1 mit Querschienen 115 aufgebaut werden, deren gegenseitiger Abstand an die Abstände der Maueröffnungen 90 angepasst ist.

Die Stromschienenmodule 1 können dabei in Längsrichtung voneinander beabstandet sein (siehe Fig. 6), oder sich seitlich teilweise überlappen (siehe Fig. 9). Die starr miteinander verbundenen Elemente 11, 12 des Stromschienenmoduls 1 können aneinander liegen (siehe Fig. 6) oder voneinander beabstandet sein, was mittels Gewindestangen 61 (siehe Fig. 9) und damit verbundenen Schraubenmuttern 62 leicht realisiert werden kann. In diesem Fall können alle Anschlusskontakte nebeneinander angeordnet sein und durch starre und/oder elastische elektrische Verbindungen 2, 3 miteinander verbunden werden.

### Literaturverzeichnis

[1] Produktkatalog "Niederspannungs-Schienenverteiler LANZ HE 2.5.2" der LANZ OENSINGEN AG vom Januar 2013
[2] Produktkatalog "MULTIFIX" der LANZ OENSINGEN AG vom August 2001
[3] EP1589627B1
[4] EP1905723B1
[5] EP3038222A1
[6] US3004096A
[7] US2906811A
[8] US3377421A

## Patentansprüche

1. Stromschienenmodul (1) mit wenigstens einer ersten und einer zweiten Stromschiene (11; 12), die in einem Stromschienenkörper (16) eingegossene Leitungsstäbe aufweisen, deren Endstücke (111, 112; 121, 122) je an verschiedenen Enden aus dem zugehörigen Stromschienenkörper (16) hervortreten und von denen die einander zugewandten Endstücke (112, 121) durch elektromechanische Verbindungsmittel (2, 21, 22) miteinander verbunden sind, wobei die Stromschienenkörper (16) der beiden Stromschienen (11; 12) an den einander zugewandten Enden durch mechanische Verbindungsmittel (6), vorzugsweise je mittels wenigstens einer Schraubengarnitur (61, 62), mechanisch miteinander verbunden sind, sodass die Stromschienen (11; 12) einerseits durch die mechanische Verbindung und andererseits durch die elektrische Verbindung, die voneinander getrennt sind, miteinander verbunden sind, **dadurch gekennzeichnet, dass** die Stromschienenkörper (16) der miteinander verbundenen Stromschienen (11; 12) zueinander korrespondierende Verbindungsflächen aufweisen, die aneinander anliegend durch die mechanischen Verbindungsmittel (6) miteinander verbunden sind.

2. Stromschienenmodul (1) nach Anspruch 1, **dadurch gekennzeichnet, dass** zumindest einige der Endstücke (111, 112; 121, 122) der Leitungsstäbe parallel zur Längsachse der Stromschienen (11; 12) ausgerichtet sind und frontseitig oder rückseitig aus dem zugehörigen Stromschienenkörper (16) hervortreten oder dass zumindest einige der Endstücke (111, 112; 121, 122) der Leitungsstäbe senkrecht oder schräg zur Längsachse der Stromschiene (11; 12) ausgerichtet sind und seitlich aus dem zugehörigen Stromschienenkörper (16) hervortreten.

3. Stromschienenmodul (1) nach Anspruch 1 oder 2, **dadurch gekennzeichnet, dass** die Stromschienenkörper (16) aus einem Isolationsmaterial, wie Giessharz oder Polymerbeton, geformt sind.

4. Stromschienenmodul (1) nach Anspruch 1, 2 oder 3, **dadurch gekennzeichnet, dass** die Verbindungsflächen an zueinander korrespondierenden Formteilen (4) vorgesehen sind, die formschlüssig miteinander verbunden sind.

5. Stromschienenmodul (1) nach einem der Ansprüche 1 - 4, **dadurch gekennzeichnet, dass** die mechanischen Verbindungsmittel (6, 6A, 6B, 6C) wenigstens ein Band (6A), wenigstens einen festen oder elastischen Montagebügel oder Montagering (6B), oder wenigstens eine Schraubverbindung (6C; 61, 62) umfassen.

6. Stromschienenmodul (1) nach Anspruch 5, **dadurch gekennzeichnet, dass** die Stromschienenkörper (16) wenigstens je eine Öffnung (17), wie eine Gewindebohrung oder eine Bohrung mit einem Gewindeeinsatz, aufweisen, in die eine Verbindungsschraube (61) der Schraubverbindung (6C) einführbar ist.

7. Stromschienenmodul (1) nach einem der Ansprüche 1 - 6, **dadurch gekennzeichnet, dass** die Verbindungsflächen an zueinander korrespondierenden Formen oder Anformungen (116A; 116B) der Stromschienenkörper (16) vorhanden sind, die anhand der mechanischen Verbindungsmittel (6, 6A, 6B, 6C) miteinander verbunden sind.

8. Stromschienenmodul (1) nach einem der Ansprüche 1 - 7, **dadurch gekennzeichnet, dass** eine der Stromschienen (11) T-förmig ausgebildete ist und eine entlang der Längsachse (y) ausgerichtete Längsschiene (116) und eine vorzugsweise senkrecht zur Längsachse (y) ausgerichtete Querschiene (115) umfasst, und deren Leitungsstäbe ebenfalls T-förmig ausgebildet sind.

9. Stromschienenmodul (1) nach Anspruch 8, **dadurch gekennzeichnet, dass** die Querschiene (115) in der Mitte oder exzentrisch auf der Längsschiene (116) angeordnet ist.

10. Stromschienenmodul (1) nach Anspruch 8 oder 9, **dadurch gekennzeichnet, dass** der Stromschienenkörper (16) der Längsschiene (116) an einem ersten Ende durch die mechanischen Verbindungsmittel (6, 61, 62) mit dem Stromschienenkörper (16) der zweiten Stromschiene (12) verbunden ist oder dass der Stromschienenkörper (16) der Längsschiene (116) an einem ersten Ende durch die mechanischen Verbindungsmittel (6, 61, 62) mit dem Stromschienenkörper (16) der zweiten Stromschiene (12) und an einem zweiten Ende durch die mechanischen Verbindungsmittel (6, 61, 62) mit dem Stromschienenkörper (16) einer dritten Stromschiene (12) verbunden ist.

11. Stromschienenmodul (1) nach einem der Ansprüche 1 - 10, **dadurch gekennzeichnet, dass** die durch die mechanischen Verbindungsmittel (6, 61, 62) miteinander verbundenen Enden der Stromschienenkörper (16) der ersten und zweiten bzw. ersten und dritten Stromschiene (11, 12; 11, 13) derart nebeneinander liegen, dass die zueinander korrespondierenden und durch elektromechanische Verbindungsmittel (2, 21, 22) miteinander verbundenen Endstücke (112, 121; 112, 132) der Leitungsstäbe vorzugsweise auf gleicher Höhe entlang der Längsachse (y) parallel zueinander und vorzugsweise senkrecht zur Längsachse ausgerichtet sind.

12. Stromschienenmodul (1) nach einem der Ansprüche 1 - 11, **dadurch gekennzeichnet, dass** die Stromschienenkörper (16) im Bereich der Endstücke (112, 121; 112, 132) der Leitungsstäbe einen grösseren Querschnitt mit grösseren aneinander liegenden Seitenflächen aufweisen, die die Verbindungsflächen bilden, und in denen wenigstens eine Öffnung (17) vorgesehen ist, die von einem Verbindungsmittel (6; 61, 62) oder von einem Monatemittel (610), wie einem Schraubenschaft oder einer Montagestange, durchstossen ist.

13. Stromschienensystem (10) mit wenigstens zwei Stromschienenmodulen (1', 1, 1") nach einem der Ansprüche 1 - 12, wobei die Stromschienenmodule (1) durch eine Stromschienenkupplung (3) miteinander verbunden sind, die deformierbare elektrische Leiter (31, 32, 33, 34) aufweist, durch die die einander zugewandten Endstücke (112, 121; 112, 132) der Leitungsstäbe der Stromschienenmodulen (1) derart miteinander verbunden sind, dass die beiden Stromschienenmodulen (1) elektrisch miteinander gekoppelt und mechanisch ganz oder teilweise voneinander entkoppelt sind.

14. Gebäude (8) mit mehreren Etagen (81, 82, ...), in dem ein Stromschienensystem (10) nach Anspruch 13, vorzugsweise in einem Gebäudeschacht (89), derart installiert ist, dass jeder Etage (81; 82; ...) eines der Stromschienenmodule (1) zugeordnet ist.

15. Gebäude (8) nach Anspruch 14, **dadurch gekennzeichnet, dass** vorzugsweise jedes der Stromschienenmodule (1) T-förmig ausgebildet ist und eine Querschiene (115) aufweist, die gegebenenfalls in einer Maueröffnung (90) oder auf einem Ausleger, ortsfest gehalten und durch die Maueröffnung (90) in die zugehörige Etage (81; 82; ...) des Gebäudes (8) hinein geführt ist.

## Claims

1. Busbar module (1) comprising at least a first and a second busbar (11; 12), which have conductor rods cast into a busbar body (16), whose end pieces (111, 112; 121, 122) project each at different ends out of the related busbar body (16) and which the end pieces (112, 121) facing one another are connected to one another by electromechanical connecting means (2, 21, 22), wherein the busbar bodies (16) of the two busbars (11; 12) are mechanically connected to one another at the mutually facing ends by mechanical connecting means (6), preferably each by means of at least one screw fitting (61, 62), so that the busbars (11; 12) are connected to one another on the one hand by the mechanical connection and on the other hand by the electrical connection, which are separated from one another, **characterized in that** the busbar bodies (16) of the mutually connected busbars (11; 12) have mutually corresponding connecting surfaces which are connected to one another in abutting relationship by the mechanical connecting means (6).

2. Busbar module (1) according to claim 1, **characterized in that** at least some of the end pieces (111, 112; 121, 122) of the conductor rods are aligned parallel to the longitudinal axis of the busbars (11; 12) and project from the associated busbar body (16) at the front side or rear side or that at least some of the end pieces (111, 112; 121, 122) of the conductor rods are aligned perpendicularly or inclined to the longitudinal axis of the busbar (11; 12) and project laterally from the associated busbar body (16).

3. Busbar module (1) according to claim 1 or 2, **characterized in that** the busbar bodies (16) are formed from an insulating material, such as casting resin or polymer concrete.

4. Busbar module (1) according to claim 1, 2 or 3, **characterized in that** the connecting surfaces are provided on mutually corresponding shaped parts (4) which are positively connected to one another.

5. Busbar module (1) according to one of the claims 1 - 4, **characterized in that** the mechanical connecting means (6, 6A, 6B, 6C) comprise at least one strip (6A), at least one fixed or elastic mounting bracket or mounting ring (6B), or at least one screw connection (6C; 61, 62).

6. Busbar module (1) according to claim 5, **characterized in that** the busbar bodies (16) each have at least one opening (17), such as a threaded bore or a bore with a threaded insert, into which a connecting screw (61) of the screw connection (6C) can be introduced.

7. Busbar module (1) according to one of the claims 1 - 6, **characterized in that** the connecting surfaces are present on mutually corresponding forms or integrations (116A; 116B) of the busbar bodies (16), which are connected to one another by means of the mechanical connecting means (6, 6A, 6B, 6C).

8. Busbar module (1) according to one of the claims 1 - 7, **characterized in that** one of the busbars (11) is T-shaped and comprises a longitudinal bar (116) aligned along the longitudinal axis (y) and a transverse bar (115) preferably aligned perpendicularly to the longitudinal axis (y), and whose conductor rods are also T-shaped.

9. Busbar module (1) according to claim 8, **characterized in that** the transverse bar (115) is arranged in the middle or eccentrically on the longitudinal bar (116).

10. Busbar module (1) according to claim 8 or 9, **characterized in that** the busbar body (16) of the longitudinal bar (116) is connected at a first end to the busbar body (16) of the second busbar (12) by the mechanical connecting means (6, 61, 62) or **in that** the busbar body (16) of the longitudinal bar (116) is connected at a first end to the busbar body (16) of the second busbar (12) by the mechanical connecting means (6, 61, 62), 61, 62) and is connected at a second end to the busbar body (16) of a third busbar (12) by the mechanical connecting means (6, 61, 62).

11. Busbar module (1) according to one of the claims 1 - 10, **characterized in that** the ends of the busbar bodies (16) of the first and second busbar or the first and third busbar (11, 12; 11, 13), which are connected to one another by the mechanical connecting means (6, 61, 62), lie next to one another in such a way that the mutually corresponding end pieces (112, 121; 112, 132) of the conductor rods, which are connected to one another by electromechanical connecting means (2, 21, 22), are preferably aligned at the same height along the longitudinal axis (y) parallel to one another and preferably perpendicular to the longitudinal axis.

12. Busbar module (1) according to one of the claims 1 - 11, **characterized in that** the busbar bodies (16) in the region of the end pieces (112, 121; 112, 132) of the conductor rods have a larger cross-section with larger adjacent side surfaces which form the connecting surfaces, and in which at least one opening (17) is provided which is pierced by a connecting means (6; 61, 62) or by a mounting means (610), such as a screw shank or a mounting rod.

13. A busbar system (10) comprising at least two busbar modules (1', 1, 1'') according to one of claims 1 - 12, said busbar modules (1) being connected with one another by a busbar coupling (3) comprising deformable electrical conductors (31, 32, 33, 34) through which the end pieces (112, 121; 112, 132) of the conductor rods of the busbar modules (1), which are facing one another, are connected to one another in such a way that the two busbar modules (1) are electrically coupled to one another and are mechanically decoupled from one another completely or partially.

14. Building (8) with several floors (81, 82, ...), in which a busbar system (10) according to claim 13, preferably in a building duct (89), is installed in such a way that one of the busbar modules (1) is assigned to each floor (81; 82; ...).

15. Building (8) according to claim 14, **characterized in that** preferably each of the busbar modules (1) is T-shaped and has a transverse bar (115) which is optionally held stationary in a wall opening (90) or on a bracket and is guided through the wall opening (90) into the associated level (81; 82; ...) of the building (8).

## Revendications

1. Module de barres omnibus (1) comprenant au moins un premier et un deuxième barre omnibus (11; 12), qui comportent des barres conductrices coulées dans un corps de barre omnibus (16), dont les extrémités (111, 112; 121, 122) dépassent chacune à des extrémités différentes du corps de barre omnibus (16) correspondant et dont les extrémités (112, 121) se faisant face sont reliées l'une à l'autre par des moyens de liaison électromécanique (2, 21, 22), et que les corps de barres omnibus (16) des deux barres omnibus (11 ; 12) sont reliées mécaniquement l'une à l'autre aux extrémités orientées l'une vers l'autre par des moyens de liaison mécaniques (6), de préférence chacun au moyen d'au moins un raccord vissé (61, 62), de sorte que les barres omnibus (11 ; 12) sont reliées entre elles d'une part par la liaison mécanique et d'autre part par la liaison électrique, qui sont séparées les unes des autres, **caractérisé en ce que** les corps de barres omnibus (16) des barres omnibus (11 ; 12) qui sont reliés l'un à l'autre ont des surfaces de liaison correspondantes qui sont reliées entre elles en relation adjacente par les moyens (6) de liaison mécaniques.

2. Module de barres omnibus (1) selon la revendication 1, **caractérisé en ce qu'**au moins une partie des pièces d'extrémité (111, 112; 121, 122) des barres conductrices sont alignées parallèlement à l'axe longitudinal des barres omnibus (11; 12) et dépassent du corps de barres omnibus (16) associé sur le côté avant ou arrière ou qu'au moins certaines des pièces d'extrémité (111, 112; 121, 122) des barres conductrices sont alignées perpendiculairement ou en biais sur l'axe longitudinal du barre omnibus (11; 12) et dépassent latéralement du corps de barres omnibus (16) associé.

3. Module de barres omnibus (1) selon la revendication 1 ou 2, **caractérisé en ce que** les corps de barres omnibus (16) sont formés d'un matériau isolant, tel que la résine de coulée ou le béton polymère.

4. Module de barres omnibus (1) selon la revendication 1, 2 ou 3, **caractérisé en ce que** les surfaces de liaison sont prévues sur des pièces moulées (4) mutuellement correspondantes qui sont reliées positivement les unes aux autres.

5. Module de barres omnibus (1) selon une des revendications 1 - 4, **caractérisé en ce que** les moyens de raccordement mécaniques (6, 6A, 6B, 6C) comprennent au moins une bande (6A), au moins un support de montage fixe ou élastique ou une bague de montage (6B), ou au moins un raccord à vis (6C ; 61, 62).

6. Module de barres omnibus (1) selon la revendication 5, **caractérisé en ce que** les corps de barres omnibus (16) présentent chacun au moins une ouverture (17), telle qu'un alésage fileté ou un alésage avec un insert fileté, dans lequel une vis de liaison (61) du raccord à vis (6C) peut être introduite.

7. Module de barres omnibus (1) selon une des revendications 1 - 6, **caractérisé en ce que** les surfaces de liaison sont présentes sur des formes ou des intégrations (116A; 116B) mutuellement correspondantes des corps des barres omnibus (16), qui sont reliées les unes aux autres au moyen des moyens de liaison mécaniques (6, 6A, 6B, 6C).

8. Module de barres omnibus (1) selon une des revendications 1 - 7, **caractérisé en ce que** un des barres omnibus (11) est en forme de T et comprend une barre longitudinale (116) alignée le long de l'axe longitudinal (y) et une barre transversale (115) orientée de préférence perpendiculairement à l'axe longitudinal (y), et dont les barres conductrices sont en forme de T également.

9. Module de barres omnibus (1) selon la revendication 8, **caractérisé en ce que** la barre transversale (115) est disposée au milieu ou excentriquement sur la barre longitudinale (116).

10. Module de barres omnibus (1) selon la revendication 8 ou 9, **caractérisé en ce que** le corps de barre omnibus (16) de la barre longitudinale (116) est relié à une première extrémité au corps de barre omnibus (16) de la deuxième barre omnibus (12) par les moyens de liaison mécaniques (6, 61, 62) ou **en ce que** le corps de barre omnibus (16) de la barre longitudinale (116) est relié à une première extrémité au corps de barre omnibus (16) de la deuxième barre omnibus (12) par les moyens de liaison mécaniques (6, 61, 62), 61, 62) et est relié à une deuxième extrémité au corps de barre omnibus (16) d'une troisième barre omnibus (12) par les moyens de liaison mécaniques (6, 61, 62).

11. Module de barres omnibus (1) selon une des revendications 1 - 10, **caractérisé en ce que** les extrémités des corps des barres omnibus (16) des premier et deuxième ou des premier et troisième barres omnibus (11, 12 ; 11, 13), qui sont reliés entre eux par les moyens de liaison mécaniques (6, 61, 62), sont disposées l'une à côté de l'autre de telle sorte que les extrémités (112, 121 ; 112, 132) des barres conductrices qui sont reliées entre elles par des moyens de liaison électromécaniques (2, 21, 22) sont de préférence alignées à la même hauteur le long de l'axe longitudinal (y), parallèlement entre elles et de préférence perpendiculairement à l'axe longitudinal.

12. Module de barres omnibus (1) selon une des revendications 1 - 11, **caractérisé en ce que** les corps de barres omnibus (16) dans la zone des extrémités (112, 121 ; 112, 132) des barres conductrices présentent une section transversale plus grande avec des surfaces latérales adjacentes plus grandes qui forment les surfaces de liaison, et dans lequel au moins une ouverture (17) est prévue qui est percée par un moyen de connexion (6 ; 61, 62) ou par un moyen de montage (610), comme un corps de vis ou une tige de montage.

13. Système de barres omnibus (10) comprenant au moins deux modules de barres omnibus (1', 1, 1''') selon l'une des revendications 1 à 12, lesdits modules de barres omnibus (1) étant interconnectés par un couplage de barres omnibus (3) comprenant des conducteurs électriques déformables (31, 32, 33, 34) à travers lesquels les pièces frontales (112, 121 ; 112, 132) des barres conductrices des modules de barres collectrices (1) sont reliées entre elles de telle sorte que les deux modules de barres omnibus (1) sont couplés électriquement l'un à l'autre et sont découplés mécaniquement l'un de l'autre complètement ou partiellement.

14. Bâtiment (8) à plusieurs étages (81, 82, ...), dans lequel un système des barres omnibus (10) selon la revendication 13, de préférence dans un puits de bâtiment (89), est installé de telle sorte qu'un des modules des barres omnibus (1) soit affecté à chaque étage (81 ; 82 ; ...).

15. Bâtiment (8) selon la revendication 14, **caractérisé en ce que** de préférence chacun des modules des barres omnibus (1) est en forme de T et présente un barre transversal (115) qui est maintenu immobile éventuellement dans une ouverture murale (90) ou sur un support et est guidé à travers l'ouverture murale (90) dans l'étage correspondant (81 ; 82 ; ...) du bâtiment (8).
